# EUROPEAN PATENT SPECIFICATION

(11) **EP 1 224 820 B1**
(45) Date of publication and mention of the grant of the patent: **06.02.2008**
(21) Application number: 00967813.7
(22) Date of filing: 28.09.2000
(51) Int. Cl.: H04Q 7/30

(54) **METHOD AND DEVICES FOR THE OPERATION OF A RADIO BASE STATION IN A CELLULAR SYSTEM**
VERFAHREN UND VORRICHTUNGEN ZUM BETRIEB EINER FUNKBASISSTATION IN EINEM ZELLULARSYSTEM
PROCEDE ET DISPOSITIFS DESTINE AU FONCTIONNEMENT D'UNE RADIO STATION DE BASE D'UN SYSTEME CELLULAIRE

(30) Priority: 27.10.1999 EP 99121384
(43) Date of publication of application: 24.07.2002
(73) Proprietor: TELEFONAKTIEBOLAGET LM ERICSSON (publ), 164 83 Stockholm (SE)
(72) Inventor: HILDEBRAND, Uwe, 91058 Erlangen (DE)
(74) Representative: Tonscheidt, Andreas
(86) International application number: PCT/EP2000/009467
(87) International publication number: WO 2001/031951

(56) References cited:
- EP-A- 0 359 535
- EP-A- 0 876 074
- WO-A-92/16061
- WO-A-95/06369
- WO-A-95/35639
- US-A- 5 752 161
- US-A- 5 956 327

## Description

### Technical field of the invention

The present invention relates to a method for the operation of a radio base station according to the preamble of claim 1. In addition, devices and programs to perform the method are described.

### Background

In a cellular communication system like GSM or UMTS, radio base stations provide the wireless connection of the core network to user equipment, e.g. mobile phones, located in the area served by the respective base station. Generally, a base station is equipped with several antennas for the connections and serves often more than one cell, every cell covering a different area. Sector antennas which radiate signals preferably into one cell are used to decrease the level of interference between the cells. In this case, the cell is sometimes denoted as sector or cell sector of the area served by the base station. However, also cell structures with hierarchical coverage are known, e.g. umbrella cells comprising the total area of one or several smaller cells.

The base station comprises also transmission devices performing the basic radio transmission and reception functions, generally transceivers which both supply signals to the antennas and process the signals received by the antennas. It is also possible to use distinct transmitters and receivers for these purposes. The transmission devices are connected to the antennas in a fixed manner via radio frequency combining and distribution hardware which allows the connection of several transmission devices to a single antenna if the capacity in a cell needs to be increased above the limit for a single transmission device. The routing of connections over the transmission devices is generally controlled by a superior node in the network, e.g. a base station controller (BSC) or a radio network controller (RNC).

A fixed connection to the antennas has the disadvantage that the number and capacity of the transmission devices have to be chosen according to the peak traffic expected for the cell. The peak traffic will generally be considerably higher than the average traffic which leaves expensive transmission devices with low use over extended periods of time. The traffic profiles in adjacent cells may differ considerably with respect to their peak times, especially if the cells cover areas differing in occupancy during the day and differing in use, e.g. office areas, residential areas or recreational areas. Therefore, some transceivers in a base station may process no traffic or a low traffic load while the load of other transceivers in the same base station but serving a different cell is at the capacity limit.

To solve this problem, application WO 95/06369 proposes to provide the base station with an additional transceiver which is connected simultaneously to antennas serving different cells and is intended to cover peak traffic. This allows simultaneous coverage of the whole area served by the base station with one additional transceiver without the necessity to install an according number of transceivers for each cell. However, the signals from the additional transceiver are disadvantageously radiated in all cells and increase in the interference level accordingly, especially if several additional transceivers are operating in a base station. As a result, the advantages of splitting up the service area of a base station into cells are removed with increasing number of additional transceivers.

Application WO 95/06369 also mentions that additional transceivers can be switched between different cells.

Similarly, also patent application EP 359535 A2 and patent US 5,956,327 propose to provide an additional transceiver in a base station which radiates into several cells and accordingly increases the interference level in the communication system.

Patent US 5,752,161 also describes an additional transmission device which can be switched to different cells of a base station. However, the additional transmission device is connected to the cells only in case of the failure of a formerly allocated transmission device in the respective cell and does not provide additional traffic capacity.

Furthermore, communication systems are generally provided with means for the measurement of the traffic load in the cells, e.g. the number of connections in a cell or the total data rate of all connections. In the state of the art, the measurements are mainly performed to ensure a defined quality of service in the system and to avoid a congestion when resources are highly loaded. If the traffic load reaches the limit of the transceivers, the set-up of additional connections is denied by the system.

A traffic load is also measured in document WO 92/16061 for a first base station. If the traffic load exceeds a predetermined level, a transmission device in a neighboring base station is switched to an antenna partly covering the cell area of the first base station. User equipment can then connect to either base station. However, this approach also significantly increases the interference in the communication system and is not applicable in a single base station.

Patent application EP 876 074 proposes to monitor connections on the beams of a base station with a beam-forming antenna and to allocate additional frequencies to a beam according to traffic requirements. However, beam-forming antennas are complicated compared to conventional antennas and a reassignment of frequencies requires unused frequencies and can conflict with the cell planning of operators.

### Summary of the invention

It is an object of the present invention to obviate these disadvantages and process varying traffic loads in a base station with a minimum number of transmission devices. It is a further object of the invention to provide a communication system with a low level of interference.

According to the invention, the method described in claim 1 is performed. Furthermore, the invention is embodied in devices and programs as described in the claims.

In the proposed method, the traffic load is measured in at least one cell served by the base station and evaluated. Preferably, the traffic load in all cells served by a base station is measured and compared to detect and solve resource conflicts if several cells have simultaneous high traffic loads. The load measurement can be performed in the base station or a superior node in the communication system like a base station controller (BSC) or a radio network controller (RNC).

According to the results of the evaluation, the allocation of a transmission device to a cell is decided. The decision can be performed in the base station with an information of the allocation to the superior node controlling the base station. Alternatively, the decision is performed in the superior node and a command is sent to the base station to allocate the transmission device to the selected cell. Usually, the transmission device is a transceiver although it is possible that a transmission device is a receiver or transmitter. One or several transmission devices in the base station can be allocated to different cells.

If the allocation to a cell is decided, the transmission device is connected to an antenna serving the cell. In most cases, a cell is served by an antenna system comprising several antennas to which the transmission device is connected instead of a single antenna, especially to provide receive or transmission diversity. The base station is provided with switches to connect the radio frequency input and output of the transmission devices with radio frequency combining and distribution devices. The combining and distribution devices allow the connection of several transmission devices to a single antenna system or a single antenna. Preferably, antennas are adapted to different cells, e.g. by using sector antennas, to decrease the level of interference.

Generally, the method comprises an adjustment of the operating parameters of the transmission device to the cell to reduce the level of interference in the system and provide a higher flexibility. Some examples of said operating parameters are the transmitter and receiver frequency, the receiver diversity, the output power and filling pattern of the transmitter, the base station identity code or parameters of channels like the channel combination, the timeslot number, the frequency list, hopping sequence number, mobile allocation index offset, frame number offset or training sequence. In addition to operating parameters defining the operation of the transmission device on the connections to the antennas, i.e. the air interface, operating parameters can also be adapted which define the operation of the transmission device in relation to other devices in the base station or superior nodes. Examples are logical addresses or timeslots for connections or parameters of measurements which the transceiver performs. It is conceivable to use fixed operating parameters of the transmission devices in all cells served by a base station irrespective of the actual allocation.

Preferably, at least one transmission device is permanently allocated to each cell to provide a minimum traffic capacity including especially mandatory channels like the broadcast control channel in GSM systems which provides basic information about the cell to user equipment. For this purpose a customary transceiver can be used.

An advantage of the proposed method is the flexible load sharing between transmission devices. The total number of transmission devices in a base station and correspondingly the space to accommodate the devices can be reduced because they can be allocated to the cells with the highest traffic loads. For a given number of transmission devices, the maximum traffic load which can be processed for a cell is increased. In case of a faulty transmission device, another device can be reallocated to a cell. The level of interference in the communication system is low as a transmission device radiates signals only into the cells in which it is connected to the corresponding antenna or antenna system. The construction of the receivers or receiving parts in the transmission devices can be comparatively simple if only signals from a single cell have to be processed. The method can be used irrespective of the type of radio access in the communication system and is suitable for systems with time division multiple access like GSM, code division multiple access like UMTS or frequency division multiple access. Equipment in the superior node which controls transmission devices and the bandwidth in the links between the superior node and the transmission devices can be reduced.

In a preferable embodiment of the invention, the traffic load in a cell is evaluated by comparison to at least one threshold. The allocation of a transmission device is decided according to the evaluated traffic load, i. e. a cell with a high traffic load is selected for the allocation. The traffic load is high if a predefined upper threshold for the cell is reached or exceeded, for example the capacity limit of those transmission devices permanently allocated to a cell and permanently connected to an antenna. Furthermore, a low traffic load can be defined for cell by a lower threshold indicating if a transmission device can be reallocated to another cell. If several transmission devices can be allocated to different cells, the thresholds preferably vary according to the number of transmission devices presently serving the cell. Alternatively, the thresholds can be limits for the traffic load of some or several transmission devices allocated to the respective cell.

Preferably, the device in the communication network which routes connections through the transmission devices to the cells, generally the superior node controlling the base station, is informed of the reallocation. For this purpose, an indication or confirmation of an allocation is sent to the superior node controlling the routing. The superior node can route connections through the transmission device starting from the reception of the message. If the decision of the allocation is performed in the superior node, the successful execution of the corresponding command in the base station is confirmed. If the decision is performed in the base station, the allocation is indicated to the superior node. The indication or confirmation avoids errors in case of a failed or delayed reallocation.

Preferably, the measurement of the load is performed by summing up predefined events, operating conditions or occupation times of resources for a cell during a period of time. The sums accumulated during the measurement period indicate the traffic loads which are used for the decision of the allocations. The summing up of predefined events like access requests to a cell by user equipment or the allocation of a traffic channel provides a very simple load measurement with the disadvantage that the lengths of occupation periods are not taken into account. Access requests also indicate traffic load which is requested by users but can not be established presently due to lacking traffic capacity. Occupation periods can be considered by summing up the allocation times or idle times of resources, e.g. traffic channels. An alternative is the summing up of special operating conditions, e.g. how often a predefined number of traffic channels was simultaneously allocated during the evaluation period. The latter alternatives give a good estimation of the traffic load with moderately increased effort.

When a transmission device is allocated to another cell, connections routed through the device are released. To avoid that the reallocation is blocked due to ongoing connections, additional connections in a cell are preferably routed over a subset of the transmission devices serving the cell. A selective routing is proposed especially if the reallocation of a transmission device serving the cell is decided or if the measured traffic load in the cell is low. For example in case of a low traffic load, connections can be routed exclusively over a subset of transmission devices which consists of or comprises the devices permanently allocated to a cell. Different subsets can correspond to different traffic loads. It is possible to define an order of the transmission devices according to which connections are routed through transmission devices with free resources.

Even if no new connections are routed through a transmission device, an ongoing connection can block the reallocation. To avoid this case, a handover of connections from a transmission device which can be reallocated to one or several transmission devices serving the same cell is proposed if the reallocation is decided or if the traffic load in the cell is low. Preferably, the transmission device to which the intracell handover is performed is a transmission device permanently allocated to the cell. An intracell handover is used in the state of the art to change the transmission device in case of a bad signal reception by user equipment.

To simplify the decision of a reallocation, it is proposed to define a released state for transmission devices. A transmission device is released from a cell if the load in the cell is low. In the released state, the transmission device is blocked for all or at least for additional connections. The transmission device is only allocated to another cell if it is in the released state which can be indicated by a flag in a list of parameters containing properties of the transmission device. Like all threshold values corresponding to a cell, the threshold value for the release of a transmission device can depend on the number of transmission devices allocated to a cell. It is possible that different released states are defined for a transmission device. For example, in a first released state with a corresponding first threshold value for release, a transmission device can be allocated to any cell requiring additional traffic capacity while a second released state with a higher threshold for release is also defined. In the second released state, the transmission device can only be allocated to cells for which the required traffic capacity significantly exceeds the current traffic capacity. This allows to reallocate a transmission device in case of significant differences between the current and required capacities of the cells while frequent reallocations due to small variations in the traffic loads are avoided.

If the traffic load decreases in a cell for a limited period, the reallocation of a transmission device can be necessary to the same cell to which it was allocated before. It is therefore proposed that the operating parameters and connections of a released transmission device remain unchanged until it is allocated to another cell. In this way, the average reallocation time is reduced.

For a transmission device, an initial allocation can be defined. The initial allocation is established if the traffic load in all cells to which the transmission device can be allocated is low or not high, e.g. below an upper threshold. The initial allocation corresponds for example to the most probable traffic distribution in the cells.

In some cases a load evaluation has the result that a transmission devices is preferably reallocated shortly after the last allocation took place, e.g. if the load of cells served by a base station is comparable or if short traffic peaks occur. This can effectively block a transmission device if the intervals between reallocations are on the order of the time necessary for the reallocation. It is therefore proposed that the decision of an allocation comprises a check if a wait time after the previous allocation of the transmission device has passed. A wait time can also be defined for the establishment of the initial allocation. The wait times should be long compared to the evaluation periods and the time necessary for a reallocation. This avoids a blocking of transmission devices and increases the stability of the method. To avoid repeated releases of a transmission device upon rapidly varying traffic loads, a release is preferably also only performed if a wait time after the last allocation has passed. The wait times for release, initial allocation and reallocation may differ. The reallocation of transmission devices can be excluded by setting a wait time to infinity.

To reduce the signaling load in the system, the allocation of a transmission device is preferably decided in the radio base station. A superior node controlling the base station, e.g. a base station controller (BSC), is informed of the allocation and approves it. Alternatively the decision can be performed in the superior node and a command is sent to the base station to perform the reallocation. Load measurements can be performed either in a base station or a node controlling the base station, preferably in the device performing the decision to reduce the signaling in the communication system.

Operating parameters for the adjustment of a transmission device to a cell can be loaded from a memory in the base station which allows a fast reallocation of a transmission device and reduces the data traffic in the system. Alternatively, operating parameters are transmitted from a superior node during the reallocation process which simplifies the updating of data upon changes in the system. If parameters are held in a memory in the base station the latter has to be updated upon changes in the communication system wherein the operating parameters can also be sent by a superior node. As operating parameters of different transmission devices in a cell can influence each other, e.g. coordinated hopping sequences, an update of the operating parameters for all transceivers serving a cell can be preferable in case of a reallocation.

A radio base station according to the invention comprises at least two antennas for connection to user equipment in the cells served by the station and transmission devices for supplying signals to the antennas and/or processing signals received by the antennas. The radio base station comprises or is connectable to means for selection of a cell which requires additional transmission capacity. The selection is performed according to the measured traffic load in at least one cell and comprises an evaluation of the traffic load and, optionally, a check whether a wait time has passed. In case that the selection is performed in the base station, the superior node controlling the base station is informed about the selection and confirms it. The base station is provided with switches for connecting at least one transmission device alternatively to antennas serving different cells. The switches can be controlled by commands from the means for selection.

Preferably, the base station comprises means to adapt the operating parameters of at least one transmission device to the selected cell. In a simple embodiment, the means comprise a memory for the operating parameters of a transmission device and a controller which stores parameters sent by a node controlling the base station in the memory and acknowledges the receipt of the parameters to the sending node. The transfer of operating parameters form a superior node can be advantageous as the operating parameters of the transmission devices serving a cell can influence each other, e.g. the frequency hopping has to be coordinated, and need to be recalculated upon each reallocation.

A base station can comprise a memory for storing operating parameters of a transmission device for at least two cells. The memory can be part of a transmission device or a common memory can store operating parameters for several transmission devices in a base station.

To ensure a basic transmission capacity in each cell, a preferable base station comprises transmission devices which are permanently connected to an antenna or antenna system. For this purpose, conventional transmission devices can be used in addition to one or several transmission devices which can be connected to different antennas and are adapted for a reallocation.

A radio base station according to the invention can comprise transmission devices as they are known in the state of the art if they are connectable to different antennas and provided with a memory to store operating parameters for the cell served by the antenna. A preferable transmission device comprises means to control switches for connections to different antennas and means to update operating parameters in the memory according to the selected antenna or antenna system. In this way, a simple modular construction of a base station is possible with transmission devices permanently allocated to a cell and transmission devices which can be switched to different cells.

Furthermore, a transmission device is proposed which comprises a memory for the operating parameters of at least two and preferably all cells served by the base station. The operating parameters of the transmission device can be changed fast and in a simple way by selection of a parameter set from the memory.

It is often preferable to perform the selection of a cell and optionally the load measurement and evaluation in a control device of the cellular system, e.g. in a system node like a BSC or an RNC. The control device can be located remote from the base station. A control device according to the invention comprises means to select a cell which requires additional transmission capacity according to the measurements. Therefore, the means for selection comprise or are connectable to means for the measurement of the traffic load in a cell served by the radio base station. A load evaluation can be performed by comparison of the load to predefined threshold values. The selection means control switching means for connecting at least one transmission device alternatively to antennas serving different cells.

Preferably, the invention is implemented as a program unit which is part of the software controlling a device in a cellular communication system. The program unit can perform any steps of the methods described. It can be stored on a data carrier like a magnetic or optical recording medium or it can be loadable into the device, e.g. a base station or a superior node in the system. The unit comprises or is connectable to means for the measurement and evaluation of the traffic load in at least one of the cells served by a base station which is equipped with at least two antennas for connection to user equipment and transmission devices for supplying signals to the antennas and processing signals received by the antennas. Furthermore, the unit comprises means for selection of a cell which requires additional transmission capacity according to the measurements and means to control switches for connecting at least one transmission device to an antenna serving the selected cell. Generally, the means for evaluation, selection and control are also program units.

The above devices and methods are suitable for use a communication network.

The foregoing and other objects, features and advantages of the present invention will become more apparent in the following detailed description of preferred embodiments as illustrated in the accompanying drawings.

### Brief description of the drawings

- Fig. 1: shows a schematic representation of cells and a radio base station in the state of the art
- Fig. 2: shows the connections between a transceiver and the antennas in a radio base station according to the invention
- Fig. 3: shows a representation of a transceiver according to the invention
- Fig 4: shows a flow diagram of a method according to the invention
- Fig 5: shows a flow diagram of the load evaluation in a method according to the invention
- Fig 6: shows a flow diagram of the decision for transceiver allocation in a method according to the invention
- Fig 7: shows a first signaling sequence in a method according to the invention
- Fig 8: shows an alternative signaling sequence in a method according to the invention

### Detailed description of the invention

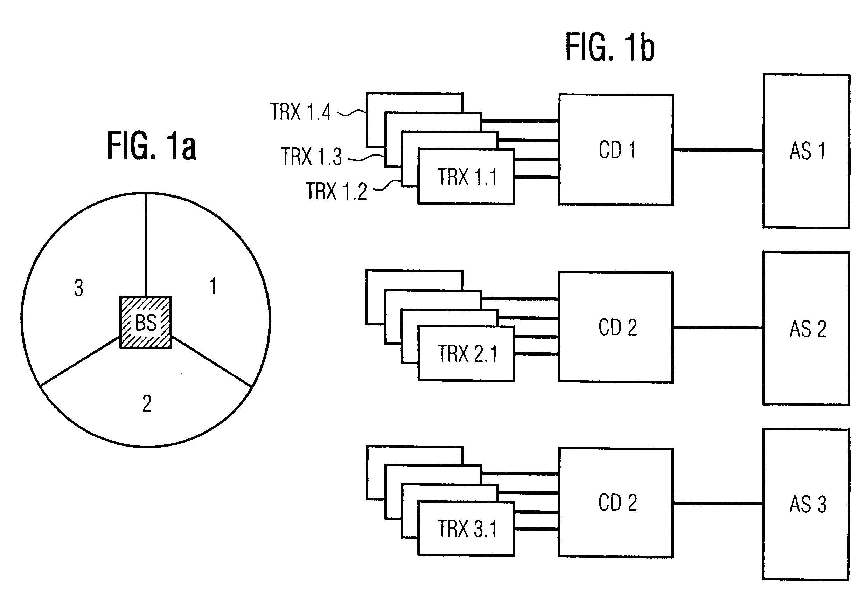

In a communication system in the state of the art, a radio base station BS serves several cells 1, 2, 3 as depicted in figure 1a. The wireless connection to user equipment located in the cells is performed by sector antenna systems AS which radiate into and receive signals from the cell 1, 2, 3 to which they are adapted. It is possible that an antenna system has only a single antenna. As is indicated in more detail in fig. 1b, each antenna system AS is connected to at least one transceiver TRX for the processing of the signals. Radio frequency combining and distribution devices CD allow the connection of several transceivers TRX to an antenna system AS. Each transceiver TRX is permanently connected to one of the antenna systems AS. Therefore, it is possible that transceivers TRX connected to one antenna system AS are at their capacity limit when the traffic load in the corresponding cell 1, 2, 3 is high while transceivers TRX connected to another antenna system AS are idle when there are few or no connections in the cell served by the latter antenna system.

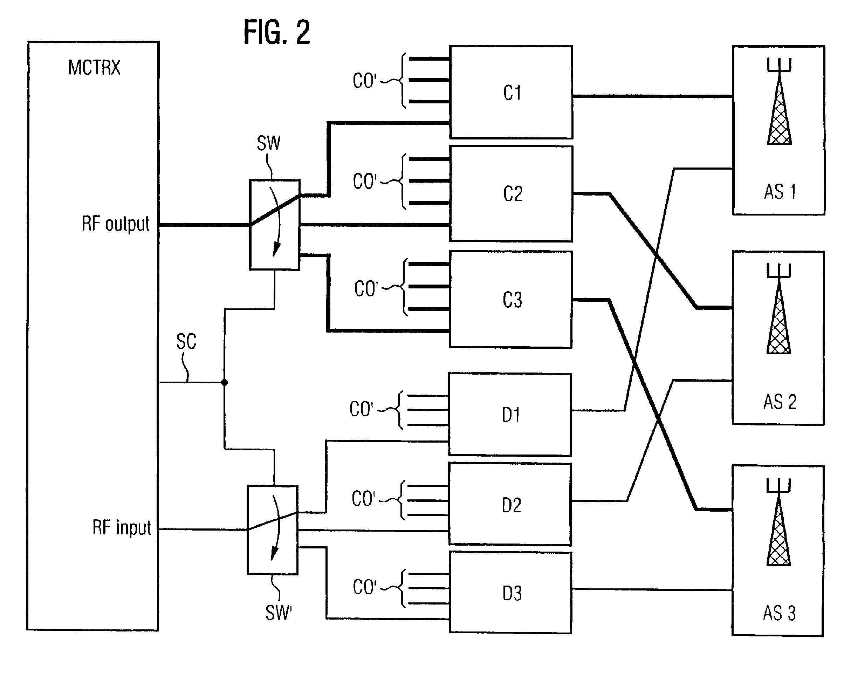

Fig. 2 shows the connections between a transceiver and antenna systems in a radio base station according to the invention. For every cell served, the base station comprises transceivers which are permanently connected to the antenna systems AS as known in the state of the art and described with respect to figure 1. In addition, the base station has at least one transceiver which can be connected to more than one antenna system AS, i.e. allocated to different cells, and which is denoted as multi-cell transceiver MCTRX below. To simplify the drawing, only the connections of the combining and distribution devices C, D to one multi-cell transceiver MCTRX are shown while connections CO' to other transceivers are only indicated.

The radio frequency RF output and the radio frequency RF input of the multi-cell transceiver MCTRX is connected to the combining and distribution devices C, D respectively via switches SW, SW' assigned to the multi-cell transceiver MCTRX. The switches SW, SW' allow to connect the transceiver alternatively to different antenna systems AS. While figure 2 depicts switches separated from the transceiver, the switches SW, SW' could also be part of the multi-cell transceiver MCTRX. The setting of the switches SW, SW' is controlled by switch control signals generated in a control unit of the multi-cell transceiver and transmitted over a switch control connection SC. Preferably, all switches SW, SW' controlled by the multi-cell transceiver MCTRX can be operated with a common signal. In case of antenna diversity, the multi-cell transceiver is provided with an input or output for each receiving or transmitting branch which is connected via a corresponding switch SW, SW' to an antenna system AS.

The number of possible switch settings corresponds for example to the number of cells to which the multi-cell transceiver can be allocated, i. e. all cells served by the base station or a subset of those cells only. The example shows a configuration in which three cells can be served by the multi-cell transceiver MCTRX. The maximum number of transceivers which can be allocated to a cell in this way is the sum of all transceivers TRX permanently connected to the respective antenna system AS and of the multi-cell transceivers MCTRX which can be switched to the antenna system AS. As an example, a base station with three antenna systems has a total of six transceivers permanently connected to the antenna systems, two for each antenna system, and three multi-cell transceivers. A possible allocation in this case is that three transceivers are connected to every antenna system. Other possible allocations are one antenna system with five and two antenna systems with two transceivers each or one antenna system with four, one with three and one with two transceivers. The allocation can be changed during the operation of the base station.

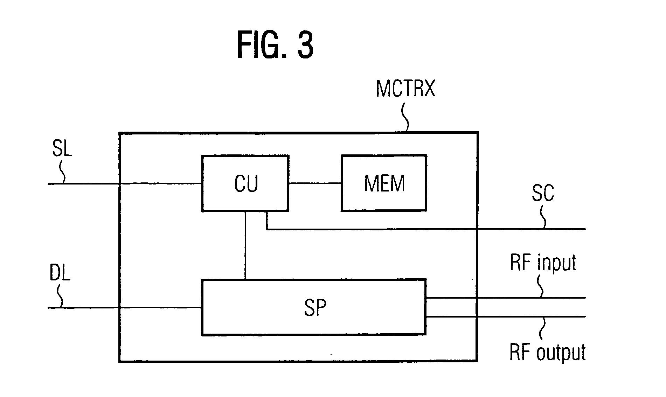

Fig. 3 shows a multi-cell transceiver MCTRX suitable for the allocation to different cells. In addition to a unit SP for the processing of the signals fed to and received from the antennas as they are known from customary transceivers, the multi-cell transceiver MCTRX has a memory MEM which can hold several parameter sets. The parameter sets contain the operating parameters of the multi-cell transceiver MCTRX for different cells to which it can be connected. Furthermore, the multi-cell transceiver comprises a control unit CU. The multi-cell transceiver MCTRX is connected to a superior node in the communication network via a signaling link SL and transmits and receives data to be processed via a data link DL. Optionally a single link can be used for data and signaling. If a decision is taken that the multi-cell transceiver MCTRX shall change the cell, a corresponding command is sent via the signaling link SL to the control unit CU in the multi-cell transceiver unless the decision is performed in the transceiver itself. The control unit CU changes the operating parameters of the multi-cell transceiver MCTRX to the values which are contained for the selected cell in the memory MEM. Using control signals, the unit also controls at least one switch in the base station via a switch control connection SC. The switch connects the radio frequency RF input and output of the multi-cell transceiver MCTRX to the antenna system AS serving the selected cell. If the operating parameters for a cell shall be changed in the multi-cell transceiver MCTRX, updated sets of operating parameters can be sent from a superior node via the signaling link SL. As the data rate over the signaling link is comparatively low, the parameter sets in the memory MEM allow a reduced reallocation time of the multi-cell transceiver MCTRX. The amount of data transmitted during the reallocation is considerably reduced.

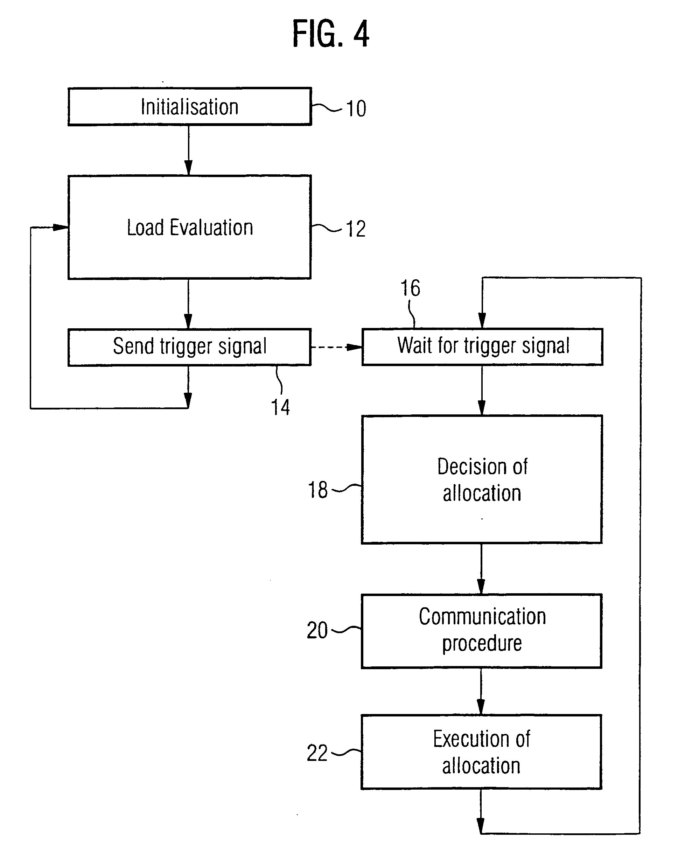

The flow diagram in figure 4 shows a method according to the invention. In a first step, an initialization 10 of one or several multi-cell transceivers MCTRX in a base station is performed, e.g. during the installation of the base station. In the initialization, the multi-cell transceivers are allocated to cells according to a predefined initial allocation and provided with operating parameters. Following the initialization 10, a load evaluation 12 is performed for a predefined period. The load evaluations 12 are repeated regularly. When the evaluation 12 is finished, a trigger signal 14 is sent to initiate the decision, whether multi-cell transceivers are allocated to other cells. The trigger signal can be amended by the measured loads if the devices performing measurement and decision are different. The trigger signal 14 synchronizes the load evaluation and decisions of allocations which are generally performed in cycles executed simultaneously wherein the decisions are based on the results of precedent load evaluations. In addition, the trigger signal 14 allows to perform different parts of the method in devices of a communication network which are remote from each other.

The cycle for decision and execution of an allocation begins with a waiting step 16, in which the reception of the trigger signal is awaited. The trigger signal indicates that the load evaluation 12 is finished and that values corresponding to the load are ready for download to the device performing the allocation decision. Alternatively, the trigger signal can be amended by the measured values. After reception of the trigger signal, the allocation decision 18 is performed. The result of the decision is transmitted to the superior node controlling the base station and the approval or acknowledgement of the decision 18 by the superior node is awaited in communication procedure 20. If the superior node performs decision 18, communication procedure 20 is executed within the superior node. One or several multi-cell transceivers are configured for the corresponding cells, i.e. provided with corresponding sets of operating parameters, and connected to the appropriate antenna systems in allocation execution 22. As will be explained below, communication procedure 20 and allocation execution 22 can already be started before the decision 18 is finished if the method is performed for several multi-cell transceivers in a base station. If no reallocation was decided in decision 18, communication procedure 20 and allocation execution 22 are skipped. Finally, the cycle for decision and execution of an allocation is started again with a further waiting step 16 for a trigger signal.

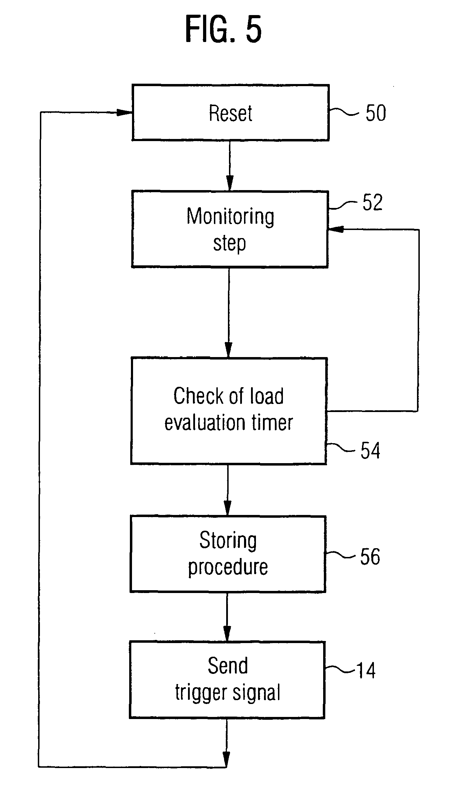

Figure 5 describes the cycle for load evaluation 12 and generation of the trigger signal 14 in more detail. The cycle begins with a reset 50 of the variables for the traffic loads in the cells which are considered in the method. Furthermore a timer is reset which determines the period for the load measurement. The variables correspond to parameters indicating the traffic load in a specific cell, for example predefined events like the request for a connection to user equipment. In monitoring step 52, the events are counted and the variables updated accordingly. The timer is increased by the duration of the monitoring step 52. In subsequent check 54, the timer is compared to the predefined period for the load evaluation. If the period has not expired, a further monitoring step 52 is started. Else the current values of the variables are stored in a memory in storing procedure 56. The memory now contains the present traffic load of the cells which is used to decide the allocation of the transmission devices. When the memory is updated, the trigger signal 14 is sent to initiate the decision for allocation and the next load evaluation 12 is started with a reset 50 of the variables and the timer.

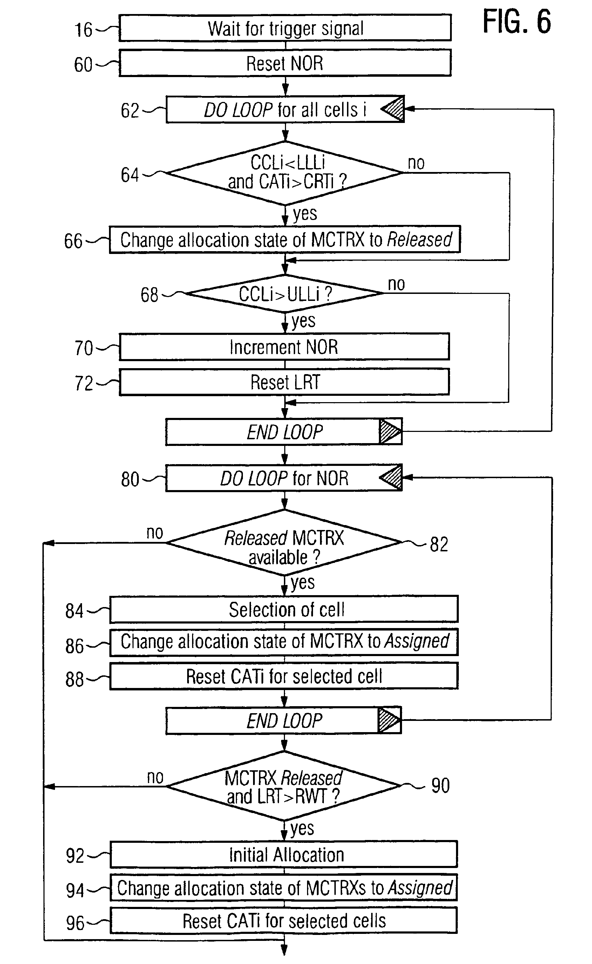

The execution of allocation decision 18 is shown in detail in the flow diagram in figure 6. After reception of the trigger signal in waiting step 16, a reset 60 of a variable NOR containing the number of transmission devices requested in all cells is performed. In following first loop 62, the method performs a check for every cell i whether a multi-cell transceiver MCTRX can be released from the cell to which it is currently assigned or if the traffic load in the cell requires an additional transmission device. For this purpose the current cell load CCLi of cell i is read or transmitted from the memory updated in step 56. A cell release threshold CRTi defines the minimum time between the assignment of a multi-cell transceiver to the cell i and the subsequent release from the same cell. If the current cell load CCLi is smaller than the lower load limit LLLi for the release of a multi-cell transceiver from cell i and the cell allocation timer CATi of cell i is greater than cell release threshold CRTi in comparison 64, a multi-cell transceiver is released from cell i. The cell allocation timer CATi is the time since a multi-cell transceiver was last allocated to cell i. It is possible that more than one multi-cell transceiver can be released from one cell. For a released multi-cell transceiver, the allocation state is changed to "released" in step 66 which can be indicated by a flag.

In second comparison 68, a check is performed whether the cell requires additional transmission capacity. For this purpose, an upper load limit ULLi defines the minimum load for the request of an additional transceiver by cell i. The upper load limit ULLi can be the maximum traffic capacity of the cell but it is preferably smaller to avoid a congestion if this value is reached. It is proposed that both the upper load limit ULLi and the lower load limit LLLi correspond to the number of transceivers allocated to cell i. If the current cell load CCLi of cell i is larger than the upper load limit ULLi the number of requested transceivers NOR is incremented by 1 in step 70. Alternatively, comparison 68 comprises a check how many additional transceivers are necessary. In that case NOR is incremented by the corresponding number in step 70. A timer LRT which contains the time since the most recent request of a multi-cell transceiver by any cell is reset in reset 72. Loop 62 is repeated until all cells i for which the method is performed and all multi-cell transceivers MCTRX in the base station have been checked.

In second loop 80, cells are selected to which transceivers are allocated. Loop 80 begins with a check 82 if any multi-cell transceiver MCTRX is in released state. If no multi-cell transceiver is in released state, loop 80 is ended and the waiting step 16 for the next trigger signal to initiate an allocation decision 18 is started. Else the cell with the largest difference between current cell load CCLi and upper load limit ULLi is selected in selection 84 and a multi-cell transceiver is allocated to this cell.

Selection 84 ensures that the multi-cell transceivers are allocated to the cells in order of decreasing difference between current cell load CCLi and upper load limit ULLi. For example, the traffic capacity of the allocated transceiver can be subtracted from the current cell load CCLi in selection 84, a flag can be set that a transceiver was allocated to the cell which is checked in the subsequent selections 84 in the same loop 80 or CCLi can be set to zero. The state of the respective multi-cell transceiver is changed from "released" to "assigned" in step 86 and a reset 88 is performed of the cell allocation timer CATi for the cell to which the assignment took place. If a sufficient number of released transceivers is available, second loop 80 is repeated as often as the number of requests NOR, else loop 80 is ended in check 82 and communication procedure 20 is started.

If after second loop 80 any multi-cell transceiver is still in released state and check 90 has the result that timer LRT is larger than the reestablishment wait time RWT, an allocation 92 of all multi-cell transceivers in released state to the initial allocation defined for the respective transceiver is performed. The reestablishment wait time RWT defines the minimum time which has to pass after the last request of a multi-cell transceiver by any cell before initial allocation 92 is executed. The state of the respective multi-cell transceivers MCTRX is changed from "released" to "assigned" in step 94 and a reset 96 is performed of the cell allocation timer CATi of those cells to which the assignments took place. The decision 18 of allocations finishes after reset 96 or after check 90 if the conditions to reestablish an initial allocation are not fulfilled.

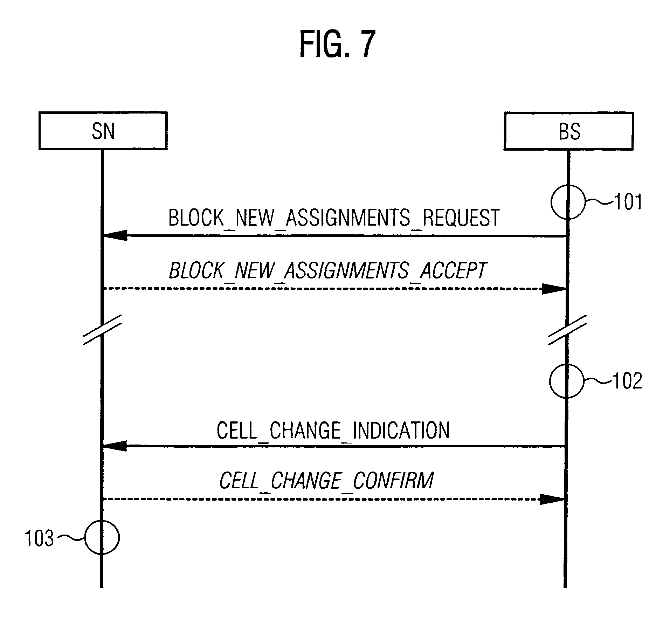

The communication procedure 20 between different devices in the communication network depends on the devices which perform different steps of the method. A preferable signaling sequence is shown in figure 7 for a method wherein the decision for the allocation of a multi-cell transceiver is performed in a base station BS which is provided with suitable operating parameters for the selected cell at the beginning of the signaling sequence. An advantage of this embodiment of the method is that changes in the superior node SN can be limited to a minimum compared to the design in the state of the art.

Before the allocation of a multi-cell transceiver to a new cell, e.g. in step 86 described above, all connections through the multi-cell transceiver MCTRX in the cell served before have to be released or rerouted to another transceiver. For this purpose, the base station BS sends a request to the superior node SN. The BLOCK_NEW ASSIGNMENTS_REQUEST excludes any new assignments of connections to the transceiver after its release has been decided at time 101. A suitable time for the request is until the change of the allocation state of the receiver to "released" in step 66 of the above embodiment. If the superior node SN approves the request, it sends a message which accepts the blocking (BLOCK_NEW _ASSIGNMENTS_ACCEPT). Beginning with the acceptance, no additional connections are routed over the multi-cell transceiver MCTRX. It is possible that the multi-cell transceiver rejects additional connections after the request to block new assignments without waiting for an acceptance message.

After a period at time 102, all connections processed for the previous cell are released or rerouted to another transceiver via intracell handover. From a memory MEM, the multi-cell transceiver MCTRX loads the set of operating parameters corresponding to the cell to which it is assigned and connects its radio frequency input and output to the antenna system AS which serves the cell using switches SW, SW'. Time 102 suitably corresponds to step 86. The multi-cell transceiver preferably has sets of operating parameters for all cells to which it can be allocated before an allocation is initiated in order to accelerate the reallocation. The successful execution of the reallocation is reported to the superior node with the CELL_CHANGE_INDICATION message which is preferably confirmed by the superior node with a message denoted CELL_CHANGE_CONFIRM. After receipt of this message, the superior node SN has the information that the selected cell is served by the multi-cell transceiver MCTRX and can route connections over the multi-cell transceiver to the cell beginning with time 103.

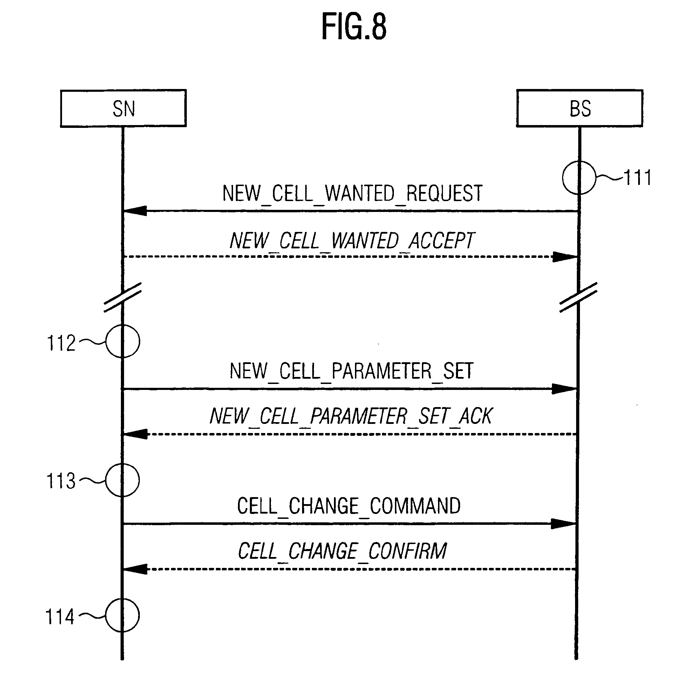

If the base station or multi-cell transceiver does not contain a parameter set for the cell to which it is reallocated, a signaling sequence as described in figure 8 is suitable. At time 111 the decision is performed in the base station to allocate a multi-cell transceiver to another cell, e. g. in selection 84. The base station sends a request to the superior node SN that the multi-cell transceiver MCTRX shall be allocated to the selected cell (NEW_CELL_WANTED_REQUEST). The superior node accepts the request with a corresponding confirmation message NEW_CELL_WANTED_ACCEPT and stops using the multi-cell transceiver MCTRX for connections in the previous cell. At time 112 all connections in the previous cell have been released, i.e. the multi-cell transceiver does not process any traffic. Now the superior node sends a set of operating parameters for the selected new cell to the multi-cell transceiver in a single or several messages NEW_CELL_PARAMETER_SET. The receipt of the parameter set is acknowledged by the multi-cell transceiver (NEW_CELL_PARAMETER_SET_ACK). At time 113 following the acknowledgement, the superior node sends the command CELL_CHANGE_COMMAND to change the served cell which is confirmed by the multi-cell transceiver after the operating parameters are updated from the set and the transceiver is connected to the antenna system serving the cell (CELL_CHANGE_CONFIRM). When the superior node has received the confirmation at time 114, it can assign connections for the cell to the multi-cell transceiver MCTRX.

If the decision to reallocate the multi-cell transceiver MCTRX is performed in the superior node SN, the signaling sequence needs not to comprise a request from the base station BS to change the served cell because the information about the release of the transceiver and the identity of the selected cell is already available in the superior node. In this case the signaling sequence can start at time 112 in fig. 8 or can simply consist of the command CELL_CHANGE_COMMAND to change the cell served and a corresponding confirmation CELL_CHANGE_CONFIRM from the multi-cell transceiver MCTRX if it is already provided with the operating parameters.

Optionally, the measurements of the traffic loads and the decision of the allocations are performed in different devices, e.g. the load measurements are performed in the base station BS and the decisions in the superior node SN. Then the corresponding signaling sequences comprise also a transfer of the measured data and the trigger signal to initiate the allocation with optional receipt confirmations. Corresponding messages are sent before time 101 and 111 in fig. 7 and 8, respectively.

The above embodiments admirably achieve the objects of the invention. However, it will be appreciated that departures can be made by those skilled in the art without departing from the scope of the invention which is limited only by the claims.

## Claims

1. Method to operate a radio base station in a cellular communication system, wherein the radio base station (BS) comprises at least two antennas for connection to user equipment in different cells and first transmission devices and at least one second transmission device which supply signals to the antennas and/or process signals received by the antennas, wherein the first transmission devices are allocated to cells and the system is provided with means for the measurement of the traffic load in a cell (1, 2, 3) served by the radio base station (BS), wherein
- the traffic load is measured in at least one cell (1, 2, 3) served by the radio base station (BS),
- the measured traffic load of the at least one cell (1, 2, 3) is evaluated ,
- an allocation of a second transmission device to a selected cell (1, 2, 3) is decided according to the evaluated traffic load, wherein the allocation comprises an adjustment of operating parameters of the second transmission device to the selected cell (1, 2, 3) coordinated to the first transmission devices allocated to the selected cell (1, 2, 3),
- and the second transmission device is connected to an antenna serving the selected cell (1, 2, 3).

2. Method according to claim 1, wherein the frequency hopping of the second transmission device is coordinated with the frequency hopping of the first transmission devices allocated to the selected cell (1, 2, 3).

3. Method according to any preceding claim, wherein the measured traffic load in a cell (1, 2, 3) is evaluated by comparison to at least one threshold.

4. Method according to any preceding claim, wherein an indication or a confirmation of the allocation of a second transmission device is sent to a superior node (SN) controlling the routing of connections through the transmission devices.

5. Method according to any preceding claim, wherein the measurement of the traffic load is performed by summing up predefined events, operating conditions or occupation times of resources for a cell during a period of time.

6. Method according to any preceding claim, wherein additional connections set up in a cell (1, 2, 3) are routed over a subset of the transmission devices serving the cell if the reallocation of a transmission device is decided or if the measured traffic load in the cell (1,2,3) is lower than a threshold value.

7. Method according to any preceding claim, wherein a handover of connections is performed to a subset of the transmission devices serving the same cell (1, 2, 3) if the reallocation of a transmission device is decided or if the measured traffic load in the cell is lower than a threshold value.

8. Method according to any preceding claim, wherein a transmission device is released from a cell (1, 2, 3) if the measured traffic load in the cell is lower than a threshold value and the transmission device is only allocated to another cell if it is in a released state.

9. Method according to claim 8, wherein the operating parameters of a released transmission device remain unchanged until it is allocated to another cell (1, 2, 3).

10. Method according to any preceding claim, wherein an initial allocation is defined for a transmission device and the initial allocation is established if the measured traffic load in all cells served by the radio base station is below an upper threshold.

11. Method according to any preceding claim, wherein the decision of an allocation or a release comprises a check if a wait time after the previous allocation or release of the transmission device has passed.

12. Method according to any preceding claim, wherein the allocation of a transmission device is decided in the radio base station (BS).

13. Method according to any preceding claim, wherein the operating parameters for the adjustment of a transmission device to a cell (1, 2, 3) are loaded from a memory (MEM) in the radio base station (BS).

14. Radio base station (BS) for a cellular system with means for the measurement of the traffic load in a cell (1, 2, 3) served by the radio base station (BS), said radio base station (BS) comprising at least two antennas for connection to user equipment and first and second transmission devices for supplying signals to the antennas and/or processing signals received by the antennas, wherein the radio base station (BS) comprises or is connectable to means for selection of a cell (1, 2, 3) which requires additional transmission capacity, wherein the selection is performed according to the measured traffic load, the base station (BS) is provided with switches (SW, SW') for connecting at least one second transmission device alternatively to antennas serving different cells (1, 2, 3) and the switches (SW, SW') are adapted for control by the means for selection, wherein the radio base station is provided with means for an adjustment of operating parameters of the second transmission device connected to the antenna serving the selected cell (1, 2, 3) coordinated to a first transmission device allocated to the selected cell (1, 2, 3).

15. Base station according to claim 14, wherein the radio base station (BS) comprises a memory (MEM) for storing the operating parameters of a transmission device for at least two cells (1, 2, 3).

16. Base station according to any of the claims 14 or 15, wherein the radio base station (BS) comprises a transmission device which is permanently connected to an antenna.

17. Transmission device for supplying signals to an antenna and/or processing signals received by an antenna of a radio base station (BS) in a cellular system, wherein the transmission device is connectable to the antenna and provided with a memory to store operating parameters for a cell (1, 2, 3) served by the antenna, wherein the transmission device comprises means to control switches (SW, SW') for alternative connections to different antennas and means to update operating parameters in the memory according to a selected cell, comprising an adjustment of the operating parameters of the transmission device coordinated to a first transmission device allocated to the selected cell (1,2,3).

18. Transmission device according to claim 17, wherein the transmission device comprises a memory (MEM) for the operating parameters for at least two cells (1,2,3).

19. Control device for a cellular communication system with means for the measurement of the traffic load in a cell (1,2,3) served by a radio base station (BS), wherein the radio base station (BS) comprises at least two antennas for connection to user equipment and first and second transmission devices for supplying signals to the antennas and/or processing signals received by the antennas, wherein the control device comprises or is connectable to means for the measurement of the traffic load and comprises means for the selection of a cell (1, 2, 3) which requires additional transmission capacity, and the selection means control switching means for connecting at least one second transmission device alternatively to antennas serving different cells (1, 2, 3), wherein the control device is provided with means for an adjustment of operating parameters of the second transmission device connected to the antenna serving the selected cell (1, 2, 3) coordinated to a first transmission device allocated to the selected cell (1,2,3).

20. Program unit on a data carrier or loadable into a control device in a cellular system with means for the measurement of the traffic load in a cell (1, 2, 3) served by a radio base station (BS), wherein the radio base station (BS) comprises at least two antennas for connection to user equipment and first and second transmission devices for supplying signals to the antennas and processing signals received by the antennas, wherein the program unit comprises a sub-unit for the measurement of the traffic load or is connectable to the means for the measurement of the traffic load, the program unit comprises a sub-unit for selection of a cell (1, 2, 3) which requires additional transmission capacity, and the program unit comprises a sub-unit to control switching means for connecting at least one second transmission device to an antenna serving the selected cell, wherein the program unit comprises a sub-unit for an adjustment of operating parameters of the second transmission device connected to the antenna serving the selected cell (1, 2, 3) coordinated to a first transmission device allocated to the selected cell (1, 2, 3).

21. Program unit according to claim 20, wherein the program unit has means adapted to perform the steps of the method according to any of the claims 2 to 13.

## Patentansprüche

1. Verfahren zum Betreiben einer Funkbasisstation in einem zellularen Kommunikationssystem, wobei die Funkbasisstation (BS) mindestens zwei Antennen zur Verbindung mit Teilnehmergeräten in verschiedenen Zellen und erste Übertragungseinrichtungen und mindestens eine zweite Übertragungseinrichtung, welche den Antennen Signale zuführen und/oder durch die Antennen empfangenen Signale verarbeiten, umfasst, wobei die ersten Übertragungseinrichtungen Zellen zugewiesen sind und das System mit Mitteln zur Messung der Verkehrslast in einer Zelle (1, 2, 3), die von der Furikbasisstation (BS) versorgt wird, ausgestattet ist, wobei
- die Verkehrslast in mindestens einer Zelle (1, 2, 3) gemessen wird, die von der Furikbasisstation (BS) versorgt wird,
- die gemessene Verkehrslast der mindestens einen Zelle (1, 2, 3) ausgewertet wird,
- über eine Zuweisung einer zweiten Übertragungseinrichtung zu einer ausgewählten Zelle (1, 2, 3) entsprechend der ausgewerteten Verkehrslast entschieden wird, wobei die Zuweisung eine Anpassung von Betriebsparametern der zweiten Übertragungseinrichtung an die ausgewählte Zelle (1, 2, 3) umfasst, koordiniert mit den ersten Übertragungseinrichtungen, die der ausgewählten Zelle (1, 2, 3) zugewiesen sind,
- und die zweite Übertragungseinrichtung mit einer Antenne verbunden wird, welche die ausgewählte Zelle (1, 2, 3) versorgt.

2. Verfahren nach Anspruch 1, wobei das Frequenz-Hopping der zweiten Übertragungseinrichtung mit dem Frequenz-Hopping der ersten Übertragungseinrichtungen, die der ausgewählten Zelle (1, 2, 3) zugewiesen sind, koordiniert wird.

3. Verfahren nach einem der vorhergehenden Ansprüche, wobei die gemessene Verkehrslast in einer Zelle (1, 2, 3) durch Vergleich mit mindestens einem Schwellwert ausgewertet wird.

4. Verfahren nach einem der vorhergehenden Ansprüche, wobei eine Anzeige oder eine Bestätigung der Zuweisung einer zweiten Übertragungseinrichtung zu einem übergeordneten Knoten (SN) gesendet wird, der das Routing von Verbindungen über die Übertragungseinrichtungen steuert.

5. Verfahren nach einem der vorhergehenden Ansprüche, wobei die Messung der Verkehrslast durchgeführt wird, indem vordefinierte Ereignisse, Betriebsbedingungen oder Belegungszeiten von Ressourcen für eine Zelle während eines Zeitabschnittes aufsummiert werden.

6. Verfahren nach einem der vorhergehenden Ansprüche, wobei zusätzliche Verbindungen, die in einer Zelle (1, 2, 3) aufgebaut werden, über eine Teilmenge der Übertragungseinrichtungen geroutet werden, welche die Zelle versorgen, falls über die Neuzuweisung einer Übertragungseinrichtung entschieden ist oder falls die gemessene Verkehrslast in der Zelle (1, 2, 3) niedriger als ein Schwellwert ist.

7. Verfahren nach einem der vorhergehenden Ansprüche, wobei ein Handover von Verbindungen zu einer Teilmenge der dieselbe Zelle (1, 2, 3) versorgenden Übertragungseinrichtungen durchgeführt wird, falls über die Neuzuweisung einer Übertragungseinrichtung entschieden ist oder falls die gemessene Verkehrslast in der Zelle niedriger als ein Schwellwert ist.

8. Verfahren nach einem der vorhergehenden Ansprüche, wobei eine Übertragungseinrichtung von einer Zelle (1, 2, 3) freigegeben wird, falls die gemessene Verkehrslast in der Zelle niedriger als ein Schwellwert ist, und die Übertragungseinrichtung nur dann einer anderen Zelle zugewiesen wird, falls sie sich in einem freigegebenen Zustand befindet.

9. Verfahren nach Anspruch 8, wobei die Betriebsparameter einer freigegebenen Übertragungseinrichtung unverändert bleiben, bis sie einer anderen Zelle (1, 2, 3) zugewiesen wird.

10. Verfahren nach einem der vorhergehenden Ansprüche, wobei eine Anfangszuweisung für eine Übertragungseinrichtung definiert ist und die Anfangszuweisung vorgenommen wird, falls die gemessene Verkehrslast in allen Zellen, die von der Funkbasisstation versorgt werden, unter einem oberen Schwellwert liegt.

11. Verfahren nach einem der vorhergehenden Ansprüche, wobei die Entscheidung über eine Zuweisung oder eine Freigabe eine Prüfung umfasst, ob eine Wartezeit nach der vorhergehenden Zuweisung oder Freigabe der Übertragungseinrichtung vergangen ist.

12. Verfahren nach einem der vorhergehenden Ansprüche, wobei über die Zuweisung einer Übertragungseinrichtung in der Funkbasisstation (BS) entschieden wird.

13. Verfahren nach einem der vorhergehenden Ansprüche, wobei die Betriebsparameter für die Anpassung einer Übertragungseinrichtung an eine Zelle (1, 2, 3) aus einem Speicher (MEM) in die Funkbasisstation (ES) geladen werden.

14. Funkbasisstation (BS) für ein zellulares System mit Mitteln zur Messung der Verkehrslast in einer Zelle (1, 2, 3), die von der Funkbasisstation (BS) versorgt wird, wobei die Funkbasisstation (BS) mindestens zwei Antennen zur Verbindung mit Teilnehmergeräten und erste und zweite Übertragungseinrichtungen zum Zuführen von Signalen zu den Antennen und/oder Verarbeiten von Signalen, die durch die Antennen empfangen wurden, umfasst, wobei die Funkbasisstation (BS) Mittel zur Auswahl einer Zelle (1, 2, 3), welche zusätzliche Übertragungskapazität benötigt, umfasst oder mit solchen Mitteln verbindbar ist, wobei die Auswahl entsprechend der gemessenen Verkehrslast vorgenommen wird, die Basisstation (ES) mit Schaltern (SW, SW') zum Verbinden mindestens einer zweiten Übertragungseinrichtung wahlweise mit Antennen, die unterschiedliche Zellen (1, 2, 3) versorgen, ausgestattet ist und die Schalter (SW, SW') für eine Steuerung durch die Mittel zur Auswahl vorgesehen sind, wobei die Funkbasisstation mit Mitteln für eine Anpassung von Betriebsparametern der zweiten Übertragungseinrichtung ausgestattet ist, die mit der die ausgewählte Zelle (1, 2, 3) versorgenden Antenne verbunden ist, koordiniert mit einer ersten Übertragungseinrichtung, die der ausgewählten Zelle (1, 2, 3) zugewiesen ist.

15. Basisstation nach Anspruch 14, wobei die Funkbasisstation (BS) einen Speicher (MEM) zum Speichern der Betriebsparameter einer Übertragungseinrichtung für mindestens zwei Zellen (1, 2, 3) umfasst.

16. Basisstation nach einem der Ansprüche 14 oder 15, wobei die Funkbasisstation (BS) eine Übertragungseinrichtung umfasst, welche ständig mit einer Antenne verbunden ist.

17. Übertragungseinrichtung zum Zuführen von Signalen zu einer Antenne und/oder Verarbeiten von Signalen, die durch eine Antenne einer Funkbasisstation (BS) in einem zellularen System empfangen wurden, wobei die Übertragungseinrichtung mit der Antenne verbindbar ist und mit einem Speicher ausgestattet ist, um Betriebsparameter für eine Zelle (1, 2, 3) zu speichern, die von der Antenne versorgt wird, wobei die Übertragungseinrichtung Mittel umfasst, um Schalter (SW, SW') für wahlweise Verbindungen zu verschiedenen Antennen zu steuern, und Mittel, um Betriebsparameter in dem Speicher entsprechend einer ausgewählten Zelle zu aktualisieren, was eine Anpassung der Betriebsparameter der Übertragungseinrichtung, koordiniert mit einer ersten Übertragungseinrichtung, die der ausgewählten Zelle (1, 2, 3) zugewiesen ist, umfasst.

18. Übertragungseinrichtung nach Anspruch 17, wobei die Übertragungseinrichtung einen Speicher (MEM) für die Betriebsparameter für mindestens zwei Zellen (1, 2, 3) umfasst.

19. Steuereinrichtung für ein zellulares Kommunikationssystem mit Mitteln zur Messung der Verkehrslast in einer Zelle (1, 2, 3), die von einer Funkbasisstation (BS) versorgt wird, wobei die Funkbasisstation (BS) mindestens zwei Antennen zur Verbindung mit Teilnehmergeräten und erste und zweite Übertragungseinrichtungen zum Zuführen von Signalen zu den Antennen und/oder Verarbeiten von Signalen, die durch die Antennen empfangen wurden, umfasst, wobei die Steuereinrichtung Mittel zur Messung der Verkehrslast umfasst oder mit solchen Mitteln verbindbar ist und Mittel zur Auswahl einer Zelle (1, 2, 3), welche zusätzliche Übertragungskapazität benötigt, umfasst und die Auswahlmittel Umschaltmittel zum Verbinden mindestens einer zweiten Übertragungseinrichtung wahlweise mit Antennen, die verschiedene Zellen (1, 2, 3) versorgen, steuern, wobei die Steuereinrichtung mit Mitteln für eine Anpassung von Betriebsparametern der zweiten Übertragungseinrichtung ausgestattet ist, die mit der die ausgewählte Zelle (1, 2, 3) versorgenden Antenne verbunden ist, koordiniert mit einer ersten Übertragungseinrichtung, die der ausgewählten Zelle (1, 2, 3) zugewiesen ist.

20. Programmeinheit, die sich auf einem Datenträger befindet oder ladbar ist in eine Steuereinrichtung in einem zellularen System mit Mitteln zur Messung der Verkehrslast in einer Zelle (1, 2, 3), die von einer Funkbasisstation (BS) versorgt wird, wobei die Funkbasisstation (BS) mindestens zwei Antennen zur Verbindung mit Teilnehmergeräten und erste und zweite Übertragungseinrichtungen zum Zuführen von Signalen zu den Antennen und Verarbeiten von Signalen, die durch die Antennen empfangen wurden, umfasst, wobei die Programmeinheit eine Untereinheit zur Messung der Verkehrslast umfasst oder mit den Mitteln zur Messung der Verkehrslast verbindbar ist, die Programmeinheit eine Untereinheit zur Auswahl einer Zelle (1, 2, 3), welche zusätzliche Übertragungskapazität benötigt, umfasst und die Programmeinheit eine Untereinheit umfasst, um Umschaltmittel zum Verbinden mindestens einer zweiten Übertragungseinrichtung mit einer Antenne, welche die ausgewählte Zelle versorgt, zu steuern, wobei die Programmeinheit eine Untereinheit für eine Anpassung von Betriebsparametern der zweiten Übertragungseinrichtung umfasst, die mit der die ausgewählte Zelle (1, 2, 3) versorgenden Antenne verbunden ist, koordiniert mit einer ersten Übertragungseinrichtung, die der ausgewählten Zelle (1, 2, 3) zugewiesen ist.

21. Programmeinheit nach Anspruch 20, wobei die Programmeinheit Mittel aufweist, die dazu vorgesehen sind, die Schritte des Verfahrens nach einem der Ansprüche 2 bis 13 auszuführen.

## Revendications

1. Procédé de fonctionnement d'une station radio de base dans un système de communication cellulaire, dans lequel la station radio de base (BS - Base Station) comprend au moins deux antennes permettant une connexion à un équipement d'utilisateur agencées dans des cellules différentes, ainsi que des premiers dispositifs de transmission et au moins un second dispositif de transmission qui envoient des signaux aux antennes ou traitent des signaux reçus par les antennes, dans lequel les premiers dispositifs de transmission sont alloués à des cellules et dans lequel le système est pourvu d'un moyen de mesurage de la charge de trafic dans une cellule (1, 2, 3) desservie par la station radio de base (BS), dans lequel
- la charge de trafic est mesurée dans au moins une cellule (1, 2, 3) desservie par la station radio de base (BS),
- la charge de trafic mesurée dans l'au moins une cellule (1, 2, 3) est évaluée,
- une allocation d'un second dispositif de transmission à une cellule sélectionnée (1, 2, 3) est décidée selon la charge de trafic évaluée, l'allocation comprenant un ajustement des paramètres de fonctionnement du second dispositif de transmission par rapport à la cellule sélectionnée (1, 2, 3) coordonné avec les premiers dispositifs de transmission alloués à la cellule sélectionnée (1, 2, 3),
- et le second dispositif de transmission est connecté à une antenne desservant la cellule sélectionnée (1, 2, 3).

2. Procédé selon la revendication 1 dans lequel les sauts de fréquence du second dispositif de transmission sont coordonnés avec les sauts de fréquence des premiers dispositifs de transmission alloués à la cellule sélectionnée (1,2,3).

3. Procédé selon l'une quelconque des revendications précédentes dans lequel la charge de trafic mesurée dans une cellule (1, 2, 3) est évaluée en la comparant à au moins une valeur seuil.

4. Procédé selon l'une quelconque des revendications précédentes dans lequel une indication ou une confirmation de l'allocation d'un second dispositif de transmission est envoyée à un noeud supérieur (SN - Superior Node) qui contrôle le routage des connexions via les dispositifs de transmission.

5. Procédé selon l'une quelconque des revendications précédentes dans lequel le mesurage de la charge de trafic est effectué en additionnant des évènements, conditions de fonctionnement ou durées d'occupation de ressources prédéfinis pour une cellule durant un intervalle de temps donné.

6. Procédé selon l'une quelconque des revendications précédentes dans lequel des connexions additionnelles établies dans une cellule (1, 2, 3) sont routées via un sous-ensemble de dispositifs de transmission desservant la cellule si la réallocation d'un dispositif de transmission est décidée ou si la charge de trafic mesurée dans la cellule (1, 2, 3) est inférieure à une valeur seuil.

7. Procédé selon l'une quelconque des revendications précédentes dans lequel un transfert de connexions à un sous-ensemble de dispositifs de transmission desservant la même cellule (1, 2, 3) est effectué si la réallocation d'un dispositif de transmission est décidée ou si la charge de trafic mesurée dans la cellule est inférieure à une valeur seuil.

8. Procédé selon l'une quelconque des revendications précédentes dans lequel un dispositif de transmission est libéré d'une cellule (1, 2, 3) si la charge de trafic mesurée dans la cellule est inférieure à une valeur seuil et dans lequel le dispositif de transmission est uniquement alloué à une autre cellule s'il se trouve à l'état libéré.

9. Procédé selon la revendication 8 dans lequel les paramètres de fonctionnement d'un dispositif de transmission libéré restent inchangés jusqu'à ce que celui-ci soit alloué à une autre cellule (1, 2, 3).

10. Procédé selon l'une quelconque des revendications précédentes dans lequel une allocation initiale est définie pour un dispositif de transmission et l'allocation initiale est établie si la charge de trafic mesurée dans toutes les cellules desservies par la station radio de base est inférieure à une valeur seuil supérieure.

11. Procédé selon l'une quelconque des revendications précédentes dans lequel la décision d'une allocation ou d'une libération comprend une vérification consistant à déterminer si un temps d'attente après l'allocation ou libération précédente du dispositif de transmission est dépassé.

12. Procédé selon l'une quelconque des revendications précédentes dans lequel l'allocation d'un dispositif de transmission est décidée dans la station radio de base (BS).

13. Procédé selon l'une quelconque des revendications précédentes dans lequel les paramètres de fonctionnement pour l'ajustement d'un dispositif de transmission à une cellule (1, 2, 3) sont chargés depuis une mémoire (MEM) dans la station radio de base (BS).

14. Station radio de base (BS) pour un système cellulaire pourvue d'un moyen de mesurage de la charge de trafic dans une cellule (1, 2, 3) desservie par la station radio de base (BS), ladite station radio de base (BS) comportant au moins deux antennes de connexion à un équipement d'utilisateur ainsi que des premiers et second dispositifs de transmission permettant d'envoyer des signaux aux antennes ou de traiter des signaux reçus par les antennes, la station radio de base (BS) comprenant un moyen de sélection d'une cellule (1, 2, 3) ou étant connectable à un tel moyen, ladite cellule exigeant une capacité de transmission additionnelle, dans laquelle la sélection est réalisée selon la charge de trafic mesurée, la station de base (BS) étant pourvue de commutateurs (SW, SW') permettant de connecter au choix au moins un second dispositif de transmission à des antennes desservant différentes cellules (1, 2, 3) et les commutateurs (SW, SM) pouvant être contrôlés par le moyen de sélection, la station radio de base étant pourvue d'un moyen d'ajustement de paramètres de fonctionnement du second dispositif de transmission connecté à l'antenne desservant la cellule sélectionnée (1, 2, 3) et coordonné avec un premier dispositif de transmission alloué à la cellule sélectionnée (1, 2, 3).

15. Station de base (BS) selon la revendication 14 comprenant une mémoire (MEM) permettant d'enregistrer les paramètres de fonctionnement d'un dispositif de transmission pour au moins deux cellules (1, 2, 3).

16. Station de base (BS) selon l'une quelconque des revendications 14 ou 15 comprenant un dispositif de transmission connecté en permanence à une antenne.

17. Dispositif de transmission permettant d'envoyer des signaux à une antenne ou de traiter des signaux reçus par une antenne d'une station radio de base (BS) dans un système cellulaire, dans lequel le dispositif de transmission peut être connecté à l'antenne et pourvu d'une mémoire permettant d'enregistrer des paramètres de fonctionnement d'une cellule (1, 2, 3) desservie par l'antenne, dans lequel le dispositif de transmission comprend un moyen pour contrôler des commutateurs (SW, SW') permettant de se connecter au choix à différentes antennes, ainsi qu'un moyen de mise à jour des paramètres de fonctionnement dans la mémoire pour une cellule sélectionnée, comprenant un ajustement des paramètres de fonctionnement du dispositif de transmission coordonné avec un premier dispositif de transmission alloué à la cellule sélectionnée (1, 2, 3).

18. Dispositif de transmission selon la revendication 17 comprenant une mémoire (MEM) permettant d'enregistrer les paramètres de fonctionnement d'au moins deux cellules (1, 2, 3).

19. Dispositif de contrôle pour un système de communication cellulaire comportant un moyen de mesurage de la charge de trafic dans une cellule (1, 2, 3) desservie par une station radio de base (BS), dans lequel la station radio de base (BS) comporte au moins deux antennes de connexion à un équipement d'utilisateur ainsi que des premiers et second dispositifs de transmission permettant d'envoyer des signaux aux antennes ou de traiter des signaux reçus par les antennes, dans lequel le dispositif de contrôle comporte un moyen de mesurage de la charge de trafic ou peut être connecté à un tel moyen et comprend un moyen de sélection d'une cellule (1, 2, 3) exigeant une capacité de transmission additionnelle, et dans lequel le moyen de sélection contrôle un moyen de commutation permettant de connecter au choix au moins un second dispositif de transmission à des antennes desservant différentes cellules (1, 2, 3), dans lequel le dispositif de contrôle est pourvu d'un moyen d'ajustement de paramètres de fonctionnement du second dispositif de transmission connecté à l'antenne desservant la cellule sélectionnée (1, 2, 3) coordonné avec un premier dispositif de transmission alloué à la cellule sélectionnée (1, 2, 3).

20. Unité de programme comprise sur un support de données ou chargeable dans un dispositif de contrôle d'un système cellulaire comportant un moyen de mesurage de la charge de trafic dans une cellule (1, 2, 3) desservie par une station radio de base (BS), dans laquelle la station radio de base (BS) comporte au moins deux antennes de connexion à un équipement d'utilisateur ainsi que des premiers et second dispositifs de transmission permettant d'envoyer des signaux aux antennes et de traiter des signaux reçus par les antennes, dans lequel l'unité de programme comporte une sous-unité de mesurage de la charge de trafic ou peut être connectée au moyen de mesurage de la charge de trafic, l'unité de programme comprenant une sous-unité de sélection d'une cellule (1, 2, 3) exigeant une capacité de transmission additionnelle, et l'unité de programme comprenant une sous-unité de contrôle d'un moyen de commutation permettant de connecter au moins un second dispositif de transmission à une antenne desservant la cellule sélectionnée, dans laquelle l'unité de programme comprend une sous-unité d'ajustement de paramètres de fonctionnement du second dispositif de transmission connecté à l'antenne desservant la cellule sélectionnée (1, 2, 3) coordonné avec un premier dispositif de transmission alloué à la cellule sélectionnée (1, 2, 3).

21. Unité de programme selon la revendication 20 comportant un moyen adapté pour exécuter les étapes du procédé selon l'une quelconque des revendications 2 à 13.
